Europäisches Patentamt

European Patent Office

Office européen des brevets

(11) Publication number: **0 175 398**
A2

# EUROPEAN PATENT APPLICATION

(21) Application number: **85201289.7**

(22) Date of filing: **09.08.85**

(51) Int. Cl.⁴: **G 06 F 12/10**

(30) Priority: **17.08.84 US 641814**

(43) Date of publication of application: **26.03.86**
**Bulletin 86/13**

(84) Designated Contracting States: **DE FR GB IT**

(71) Applicant: **N.V. Philips' Gloeilampenfabrieken,
Groenewoudseweg 1, NL-5621 BA Eindhoven (NL)**

(72) Inventor: **Freeman, Martin, INT. OCTROOIBUREAU B.V.
Prof. Holstlaan 6, NL-5656 AA Eindhoven (NL)**

(74) Representative: **Faessen, Louis Marie et al,
INTERNATIONAAL OCTROOIBUREAU B.V. 6 Prof.
Holstlaan, NL-5656 AA Eindhoven (NL)**

(54) **Data processing system comprising a memory access controller which is provided for combining descriptor bits of different descriptors associated with virtual addresses.**

(57) A technique for changing attributes and/or permission bits of a portion of a segment of a virtual memory address space by allowing the bitwise combination of attribute and/or permission bits of its descriptors to yield an attribute and/or permission for a portion of said address space which is different from the attribute and/or permission for the whole segment of said memory address space.

PHA 1115 EP                       1          ·              09.07.1985

Data processing system comprising a memory access controller which is
provided for combining descriptor bits of different descriptors
associated with virtual addresses.


          The invention relates to a data processing system
comprising a processor, a memory device and a memory access controller
which are connected to a bus, said memory device comprising a first
number of memory portions and each memory portion comprises a second
number of memory subportions, each memory portion of said first number
being identified by a first level descriptor and each memory subportion
of said second number being identified by a second level descriptor,
said memory access controller comprises a translation unit for
translating a virtual address generated by the processor into a physical
address for addressing a location into said memory device, said
translation unit comprising a first level memory table for the storage
of said first level descriptors and a third number of second level
memory tables for the storage of said second level descriptors, said
third number being at least equal to said first number, a first level
descriptor being addressable by a first part of a virtual address
supplied to said memory access controller and a second level memory
table being selectable by an addressed first level descriptor, a second
level descriptor in a selected second level memory tabel being
addressable by a second part of said supplied virtual address.

          Such a data processing system is described in the
European patent application filed under the application
number 85 200 177.5. The memory device is divided in a number of memory
portions. These memory portions are for example formed either by memory
segments having variable length or by first level memory pages. Each
memory portion is divided in a number of subportions. In case that said
memory portions are formed by segments, the subportions are formed by
pages which have an equal length. The memory portions are identified by
first level descriptors which are stored in a first level memory page.
Such a first level descriptor comprises for example the segment length
field, a Page Table Pointer field, and a field for attribute and/or
permission bits indicating for example that a segment is freely
accessible for and and write operations therein. A second level descriptor comprises comparable fields to those of a first level descriptor but the content of the fields of a second level descriptor are related to the indexed subportion. For accessing the memory device, the processor generates a virtual address which is supplied to the translation unit of the memory access controller. With a first part of the supplied virtual address a first level descriptor in the first level memory table is accessed. That first level descriptor indexes a second level memory table wherein there is stored a second level descriptor for each of the subportions of the memory portion indicated by the addressed first level descriptor. With a second part of the supplied virtual address one of the second level descriptor of the indexed second level memory table is selected. A physical address for addressing the required memory location in the memory device is than formed on the base of the selected second level descriptor.

A problem that occurs when two-level descriptors are used, is that, although permissions or attributes associated with the first level descriptors extend to all subportions of the indexed memory portion. But sometimes it is desirable to have permissions or attributes for certain subportions which differ from the permissions or attributes of the whole memory portion without affecting the first level descriptor.

It is an object of the invention to provide a data processing system which offers the possibility to determine attributes and/or permissions for individual memory subportion.

A data processing system according to the invention is therefore characterized in that said memory access controller comprises logical combining means which comprises a first input for receiving at least one bit originating from an addressed first level descriptor and a second input for receiving at least one corresponding bit originating from an addressed second level descriptor, said logical combining means being provided for logically combining said corresponding received bits and supplying at an output thereof the combined bit value obtained by said logical combination.

The logical combining means offers the possibility to determine the attribute and/or permission for an individual memory subportion by logically combining corresponding attribute and/or permission bits of the first and second level descriptor.

0175398
09.07.1985

It is favourable that said logical combining being realized bitwise and said memory access controller being provided with modification means for bitwise modifying the content of said descriptors.

The modification means offers the possibility to modify the second level descriptors and thus to attribute to certain subportions of the memory attribute and/or permission bits which are different from those in the related first level descriptor.

A preferred embodiment of a data processor system according to the invention is characterized in that said modification means being provided for setting to a first logic value at least one bit of said attribute and/or permission bit in an addressed first level descriptor in order to indicate a predetermined attribute and/or permission index for the memory portion belonging to it, and for setting to said first logic value at least one corresponding bit of said attribute and/or permission bit in an addressed second level descriptor in order to indicate an attribute and/or permission index for the memory subportion belonging to it, which latter attribute and/or permission index is opposite to said predetermined attribute and/or permission index, and wherein said logical combining means being provided for applying an EXLUSIVE-OR operation on said received bits.

Using a bitwise "EXCLUSIVE-OR" operation on permission and/or attribute bits of associated first and second level descriptors yields a different protection mode while keeping track of the old one. This technique allows a portion to have subportions with different permission and/or attributes characteristics.

The invention will now be described with reference to the accompanying drawings, in which:

Figure 1 illustrates a method, called segmentation, for dividing the virtual address space;

Figure 2 illustrates a method, called two level paging, for dividing the virtual address space;

Figure 3 illustrates a method, called segmentation with paging, for dividing the virtual address space;

Figure 4 shows an example of a segment descriptor for a paged non-contiguous segment;

Figure 5 shows an example of a segment descriptor for a

0175398
09.07.1985

paged contiguous segment;

Figure 6 shows an example of a page descriptor in a page table;

Figure 7 illustrates a hardware realization of a logical combining of the protection bits of descriptors.

The present invention is applicable in a data processing system which comprises a Memory Access Controller (hereinafter called a MAC), which is provided for controlling a cache memory and which also acts as a memory management unit and which offers a large, linear virtual address space. Such a memory access controller is described in detail in the European Patent Application filed under the Application No. 85 200 177.5.
In the data processing system the MAC is placed between the central processing unit and the memory device. The memory device generally comprising a cache memory and several memory modules including a main memory and an external memory such as a disk. The MAC handles all the processor requests to memory modules and completely controls the cache memory. The MAC makes use of virtual addresses, which is a means of allowing the programmer to use an address space which may be quite different from the range of physical memory locations available to him. The virtual address space provided may be smaller than, equal to, or greater than the physical address space.

There are for example three methods of subdividing the virtual address space managed by the MAC, i.e.

a) segmentation

b) two-level paging

c) segmentation with paging.

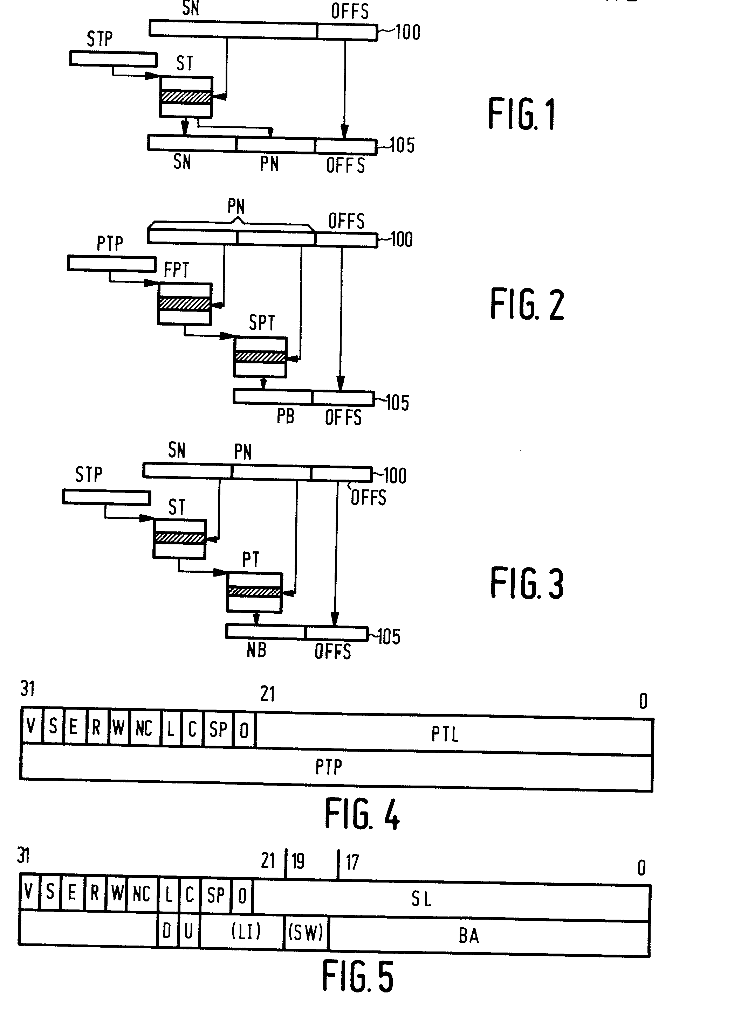

The first method (segmentation) is illustrated in Figure 1. This first method divides the virtual address space (100) into segments that are continuous in memory. A virtual address is then composed of a segment number (SN) and an offset (OFFS). When segmentation is used, the MAC is always provided with a segment table register wherein segment descriptors are stored. Those segment descriptors contain the base address of the segment in physical memory as well as the length of the segment. The physical address which has to be generated in order to access a location in the main memory is generated as given hereunder. The segment number (SN) of the virtual

0175398

address indicates a location in the segment table (ST). At that indicated location in the segment table there is stored a segment descriptor. The segment length which is present in that descriptor is compared with the offset (OFFS) of the virtual address in order to check if the segment length does not exceed the local memory capacity. If this should be the case an interrupt is generated. If on the other hand the segment length is compatible with the local memory, the offset is added to the segment basis (SN + PN) present in the descriptor and the physical address (105) is herewith generated. The advantage of segmentation is that the segments can have different lengths which thus implies less access to the main memory or the disk because the segment length can be adapted to the length of the program or data to be loaded.

The second method, called two-level paging, is illustrated in Figure 2. In this method the virtual address space (100) is divided into pages of fixed sizes, with each page configured to be for example 1K, 2K, 4K or 8K bytes long. When two-level paging is used there is no check on the offset in order to form the physical address because the pages have fixed length. Paging partitions physical main memory into same-sized page frames and secondary memory (e.g. the system disk) into pages. The paging mechanism transfers pages from secondary memoryu to page frames in main memory when necessary and, given a logical address, it performs the mapping operation, i.e. determining which page a logical address refers to and finding the associated page frame.

A virtual address (100) comprises a page number PN and an offset (OFFS). The page number field is used to locate the page frame address while the offset field locates the desired position within the page. The page number field is viewed in two parts. A first part of the page number field is used as an index into a first level page table (FPT) and a second part of the page number field is used as an index into a second level page table (SPT) indexed by the selected descriptor in the first level page table. The first level page table FPT contains descriptors, each of which consist of a page table length field and a pointer to the associated second level page table SPT. The second level page table contains the page descriptors. A page descriptor contains fields for protection codes, page attributes, history information, and the physical address of the page frame. The final physical address

0175398
09.07.1985

(105) is formed by the concatenation of the page frame number (PB) with the offset (OFFS) field of the virtual address.

The advantage of paging is that the pages have a fixed length which implies that when a page is removed and replaced by another one, the accessible memory space will again be completely occupied.

The third method, called segmentation with paging, is illustrated in Figure 3. In this method the virtual address space (100) is divided into segments, but unlike the first method, the segments are not contiguous. Instead the pages can be scattered throughout the memory. Each of the segments is divided into a number of pages which has a fixed length. This method thus combines the advantages of the first and the second method.

In this method, when the memory management unit of the MAC is called upon to translate a virtual address, the virtual address is broken up into three fields: the segment number (SN), the page number (PN), and the offset (OFFS). The segment number is used as an index into the segment table (ST) to obtain the associated segment descriptor. In the segment table there is stored a segment descriptor for each segment. Each of the segment descriptor indexes a page table wherein the page descriptors of the different pages of that segment are stored.

The page number is then used as an index into the page table (PT) pointed to by the segment descriptor. The page descriptor is then obtained which contains the physical frame address (NB). This address when concatenated with the offset yields the desired physical address.

The invention is applicable when use is made wither of the two-level paging method or of the segmentation with paging method, because the application of the invention requires at least two levels of tables which comprise descriptors. In order to describe the operation of the invention, the concept of descriptor will first be explained. As already mentioned the segment descriptors, respectively the page descriptors are stored in the segment table (ST) respectively the page table (PT; FPT, SPT).

Figure 4 shows an example of the format of a 32-bits segment descriptor in the segment table for a paged (non-contiguous) segment, and Figure 5 shows an example of the format of a contiguous segment descriptor.

A segment descriptor as illustrated in Figure 4 comprises three fields:

a) The Page Table Pointer (PTP)

This (32-bit) field contains the pointer to the page table which defines the current segment.

b) The Page Table Length (PTL)

This (22-bit) field contains the page number of the last page in the segment. The number of pages then represents a parameter indicating the length of the segment.

c) Segment Protection

This field contains the permission and attribute bits which define the status of the segment. Each use of segment is protected differently depending on the permissions granted to each process. This field comprises for example 10 bits which have the following signification:

1. Valid Bit (V).

This bit is used to indicate whether the segment is valid or not.

2. Spervisor Permission (S).

If this bit is set, supervisor permission is necessary to access this segment.

3. Access Permission Bits (R, W, E).

If these bits are set, corresponding access is available for the segment:

    Read Access (R)

    Write Access (W)

    Execute Access (E)

4. The following three bits define the mapping of the segment:

a) Non-Cacheable (NC) If this bit is set the associated segment will not be brought into the cache memory. If the associated segment comprises semaphores or could be used by two processors or I/O units concurrently it should be so marked.

b) Local (L) If this bit is set, pages of the associated segment may belong to the local memory attached to the processor.

c) Contiguous (C) If this bit is set the associated segment does not have a page table. It is segment-only and should be mapped into memory as a whole.

5. Software Protection (SP) This bit is usable by the software of the system. If this bit is set, a trap will be generated the first time the associated segment is accessed. Subsequent accesses to the segment may or may not generate a trap. Thus, the trap handling software should either reset this bit after the first interrupt, or should be capable of handling multiple traps. This bit is meant to provide a software filter for entry into segments.

6. Offset Bit (O)

This bit is used to denote whether pages of a segment start at the top (O=1) or bottom (O=1) of the segment's virtual address space.

The segment descriptors have a protection field. Thus a segment may have a read (R) permission, write (W) permission, or (E) execute permission. A read only segment would only have its R bit set, while a read/write segment would have both R and W bits set. Accessing a segment without proper permission causes what is termed an access violation. The MAC in this case causes a bus error (BERR) on the host processor.

Some segments may only be accessed in the supervisor mode, these segments will have their associated segment descriptor supervisor (S) permission bits set, otherwise an access violation will occur.

Although a segment may be accessed, its descriptor may not be present in its associated segment table. In this case, the segment descriptor entry will not have its valid (V) bit set. This will also cause an access violation.

A contiguous segment descriptor, as illustrated in Figure 5, also comprises a segment protection field which is identical to that of a non-contiguous segment descriptor (Figure 4). The contiguous segment descriptor also comprises a field (SL) indicating the segment length, even as a base address field, indicating the starting address of the segment.

History information is also kept in the segment descriptor for contiguous segments. A used bit (U) is set if the segment has recently been accessed. A dirty bit (D) is set if a segment has recently been written to. The MAC sets these bits, while the system software resets them when it performs its segment replacement algorithms.

A contiguous segment descriptor can also comprise software bits (SW) and local memory identification (LI) bits. The significance of these bits will be described hereunder by the description of page descriptors.

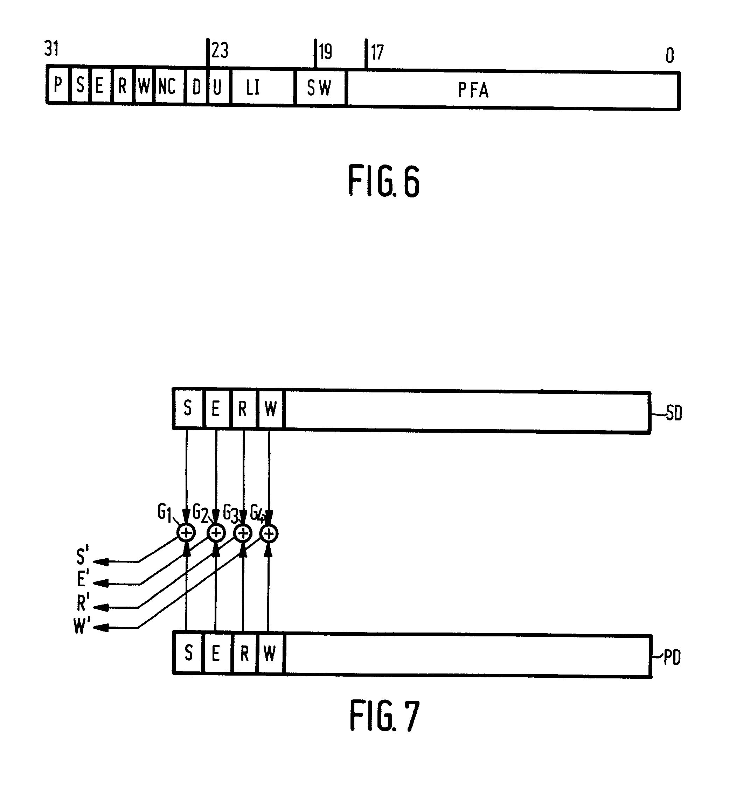

Figure 6 shows an example of the format of a 32-bits page descriptor in a page table. Page descriptors contain the same sort of protection fields (S, E, R, W, NC) as segment descriptors. In a pages system, permissions are taken from the associated page descriptors, in a segment system (paged or contiguous) permissions are taken from the associated segment descriptors.

A page descriptor also comprises:

1. a page frame address (PFA) which is a (18-bits) pointer to the physical address of the beginning of the page.

2. Three page-history bits:

   a) a Present bit (P), indicating when set, that the page is present in local memory. If this is not set when an associated location is accessed, an access violation occurs. It is at this point that the host's bus error handling routine transfers the desired page from secondary memory.

   b) a Used bit (U), indicating when set, that this page has been accessed since the last reset of this bit.

   c) a Dirty bit (D), indicating when set, that there has been written into this page since the last reset of this bit.

3. Software bits (SW). These bits may be used by software for any purpose.

4. Local memory idenfification (LI). The MAC is able to supports systems with up to 15 local memories. If a page is marked local those bits indicate in which local memory the page is resident. This will be checked against the contents of the Processor Identification Register (PIR), wherein there are stored number (from 0 to 14) identifying the MAC with its associated processor. Pages may be assigned to a processor number in the page descriptor's LI field. If a page of a local segment is accessed and its associated descriptor's LI field matches the contents of the Processor Identification Register (PIR), then local memory is accessed by the MAC; otherwise an access violation is given.

Thus, paged segments may have all pages entirely in the local memory associated with a processor, or some pages local with the rest being accessed via the system bus. The latter allows the most heavily used pages of a segment to be put in local memory.

As already described, use is made of two-level memory tables, wherein the tables of each level comprise descriptors. For the two-level paging scheme (Figure 2) the first level table is formed by the first page table (FPT) and the second level table is formed by all the second page tables (SPT). The first page table comprises first level page descriptors and the second page tables comprise second level page descriptors. When use is made of the segmentation with paging scheme (Figure 3) the first level memory table is formed by the segment table (ST) which comprises the segment descriptors and the second level memory table is formed by all the page tables (PT) which comprise the page descriptors.

The fact that now descriptors are present on both levels of the tables, offers a more flexible use of the permission and/or attribute fields of the descriptors. Consider for example the segmentation with paging scheme of Figure 3, and suppose that a segment is freely accessible for write operations therein. In that case the write access bit (W) of the segment descriptor belonging to that segment is set. However one or more pages which belong to that segment may not be freely accessible for write operations therein. Due to the use of page descriptors in the page table indicated by the segment descriptor, it is possible to reset the write bit in the page descriptors of those particular pages which are not freely accessible for write operations. The final value of the write access bit for such a particular page is then obtained by logically combining the write access bit of the segment descriptor with the write access bit of the page descriptor of that particular page.

It will be clear that this logical combining operation is applicable to all the bits of the permission or attribute fields of the descriptors, as well in the segmentation with paging scheme as in the two-level paging scheme. The descriptors of each level have some protection bits (S, E, R, W, V, NC, L, C, SP) or some attribute bits (P, U, D, LI) in common. The final values associated with a page are then obtained by the logical combination of comparable bit(s) of the fields in each descriptor.

That logical combination of one or more bits of said two descriptors can be realized either by the software of the system or by hardware means. Figure 7 illustrates a hardware realization of a logical combining of the protection bits, respectively formed by the Supervisor permission bit (S), the read (R), write (W), Execute access bit (E) of the segment descriptor (SD) and the page descriptor (PD). The respective protection bits (S, E, R, W,) of the segment descriptor (SD) are each time supplied to a respective first input of a logic gate system ($G_1$, $G_2$, $G_3$, $G_4$), and the respective protection bits of the page descriptor (PD) are each time supplied to a respective second input of the logic gate system. On the respective outputs of that logic gate system there is supplied the combined protection bit (S', E', R', W').

Preferably the logical combination is realized by "EXCLUSIVE-OR-ing" the respective descriptor bits. Consider once again the segmentation with paging scheme (Figure 3) and suppose that a particular segment is freely accessible for read operations therein. The Read Access bit ($R_S$) in the segment descriptor of that particular segment is then set equal to "1". The segment descriptor of that particular segment indicates a page table comprising the page descriptors for all the pages belonging to that segment. Consider now that a user wants to indicate that a particular page of that segment is not freely accessible for read operations. Due to the fact that the read access bit of the segment descriptor is set ($R_S$=1), it is now necessary to undo that read access permission for that particular page. Therefore, according to this preferred embodiment of the invention, the read access bit of the page descriptor of that particular page is also set equal to "1" (Rp=1). The logical combination necessary to obtain the read permission bit for that particular page is now performed by EXCLUSIVE-OR-ing $R_S$ and $R_p$, thus obtaining $R_S \oplus R_p = 0$ (where $\oplus$ stands for EXCLUSIVE-OR). Because $R_S \oplus R_p = 0$ the resultant read access bit is equal to "0" for that particular page, and thus a read access is forbidden for that particular page.

Consider now also the case that $R_S$=0, i.e. that read access is forbidden to a particular segment, and that a user wants to indicate that a particular page of that segment is freely accessible for read operations. In this case the user will also set $R_p=1$ in the page descriptor of that particular page. Now $R_s \oplus R_p = 1$ thus permitting a read access for that particular page. Using EXCLUSIVE-OR for the logical combination of the bits of the descriptors offers the advantage that an exception on an attribute or protection bit as set for the upper level (segment level) can be undo for one or more pages on a lower level, by setting the particular attribute or protection bits of the page descriptor(s) belonging to those particular pages.

The feature of logic combination of permission or attribute bits is particularly useful if a segment has write permission, selected pages may then be flagged not to have write permission. This is useful in what is known as "copy-on'write" mode. Copy-on-write for a paged segment is easily obtained by setting the appropriate W permission bits in the desired page descriptors. The "EXCLUSIVE-OR-ing" procedure then will yield a segment with write permission having several of its constituent pages write protected. This facility extends to the non-cacheable bit as well. In the copy-on-write mode certain pages are selected to be shared between software components. As soon as a page is accessed to be written to, the MAC finds an access violation, the operating system takes over and performs a copy operation. Now each software component has a separate copy. The operating system then changes the permission on the page by resetting the write bit on the page descriptor.

Using a bitwise "EXCLUSIVE-OR" operation on permission bits of associated segment and page descriptors yields a different protection mode while keeping track of the old one. This technique allows a segment to have pages with differnt permission characteristics.

This technique can also be applied to other descriptor attributes. A segment may then have an attribute while several of its individual pages may not. For instance, a segment on the whole may be able to be put in a cache, but a few pages may be selected to be non-cacheable.

This technique for combining permission or attribute fields provides a flexible means for avoiding the problems of a rigid hierarchical permission scheme which can be implemented in a memory

0175398
09.07.1985

management unit with the addition of minimal hardware in the form of additional registers and logic arrays.

0175398
09.07.1985

CLAIMS:

1.      A data processing system comprising a processor, a memory device and a memory access controller which are connected to a bus, said memory device comprising a first number of memory portions and each memory portion comprises a second number of memory subportions, each memory portion of said first number being identified by a first level descriptor and each memory subportion of said second number being identified by a second level descriptor, said memory access controller comprises a translation unit for translating a virtual address generated by the processor into a physical address for addressing a location into said memory device, said translation unit comprising a first level memory table for the storage of said first level descriptors and a third number of second level memory tables for the storage of said second level descriptors, said third number being at least equal to said first number, a first level descriptor being addressable by a first part of a virtual address supplied to said memory access controller and a second level memory table being selectable by an addressed first level descriptor, a second level descriptor in a selected second level memory table being addressable by a second part of said supplied virtual address, characterized in that said memory access controller comprises logical combining means which comprises a first input for receiving at least one bit originating from an addressed first level descriptor and a second input for receiving at least one corresponding bit originating from an addressed second level descriptor, said logical combining means being provided for logically combining said corresponding received bits and supplying at an output thereof the combined bit value obtained by said logical combination.

2.      Data processing system as claimed in Claim 1, wherein said first and second level descriptors comprises attribute and/or permission bits for indicating attribute respectively permission indexes of their respective memory (sub)portion, characterized in that said logical combining being realized bitwise and said memory access controller being provided with modification means for bitwise modifying the content of said descriptors.

3. Data processing system as claimed in Claim 2, charcterized in that said modification means being provided for setting to a first logic value at least one bit of said attribute and/or permission bit in an addressed first level descriptor in order to indicate a predetermined attribute and/or permission index for the memory portion belonging to it, and for setting to said first logic value at least one corresponding bit of said attribute and/or permission bit in an addressed second level descriptor in order to indicate an attribute and/or permission index for the memory subportion belonging to it which latter attribute and/or permission index is opposite to said predetermined attribute and/or permission index, and wherein said logical combining means being provided for applying an EXLUSIVE-OR operation on said received bits.

4. Data processing system as claimed in Claim 1, 2 or 3, charcterized in that said portions of the memory device being formed by memory segments and said subportions by memory pages having a fixed page length.

5. Memory access controller to be used in a data processing system as claimed in any of the Claims 1 to 4.

FIG. 1

FIG. 2

FIG. 3

FIG. 4

FIG. 5

| 31 | | | | | | | 23 | | 19 | 17 | | 0 |
|----|---|---|---|---|----|---|----|----|----|----|---|---|
| P | S | E | R | W | NC | D | U | LI | SW | | PFA | |

FIG. 6

| S | E | R | W | | SD |
|---|---|---|---|---|----|

S'
E'
R'
W'

$G_1$ $G_2$ $G_3$ $G_4$

| S | E | R | W | | PD |
|---|---|---|---|---|----|

FIG. 7

2-II-PHA 1115